# EUROPEAN PATENT APPLICATION

(11) **EP 2 532 719 A2**
(43) Date of publication of application: **12.12.2012**
(21) Application number: 12170674.1
(22) Date of filing: 04.06.2012
(51) Int. Cl.: C09D 11/00

(54) **Ink set, printed matter, and molded article**

(30) Priority: 06.06.2011 JP 2011126159
(71) Applicant: Seiko Epson Corporation, Shinjuku-ku Tokyo (JP)
(72) Inventor: Tsunoya, Akihiko, Nagano, 392-8502 (JP); Sugai, Keigo, Nagano, 392-8502 (JP); Hama, Yoshikazu, Nagano, 392-8502 (JP)
(74) Representative: HOFFMANN EITLE

(57) **Abstract**

There are provided an ink set, printed matter, and a molded article. A first ink and a second ink are applied over a substrate in the form of a sheet. An ink set 10 includes first inks 1 Y, 1 C, 1M, and 1K containing a pigment as a colorant, and a second ink containing no pigment. Films of the first inks 1 Y, 1 C, 1 M, and 1 K each stretch at least 70% when cured into the film with a thickness of 5 µm and the film is stretched under a 150°C environment. A film of the second ink has an elastic modulus of no more than 200 MPa when the second ink is cured into the film with a thickness of 50 to 200 µm.

## Description

### CROSS-REFERENCE TO RELATED APPLICATIONS

This application claims priority to Japanese Patent Application No. 2011-126159 filed on June 6, 2011. The entire disclosure of Japanese Patent Application No. 2011-126159 is hereby incorporated herein by reference.

### BACKGROUND

### Technical Field

The present invention relates to an ink set, printed matter, and a molded article.

### Related Art

There is a known display panel which serves as a speedometer display in an automobile passenger compartment, for example, and which has a substrate and a printing layer that is printed over the substrate with an ink (see Japanese Laid-Open Patent Application No. 2001-343260, for example). Inks that are used in the passenger compartment of an automobile are generally those with relatively high stretchability when cured. One reason for this is that the temperature inside a vehicle can rise to over 50°C on a hot summer day.

However, when an ink that merely has high stretchability is used to form a printing layer, if the display panel is subjected to mechanical processing, such as drawing or punching, cracking or separation may occur in the printing layer, making the display panel unusable, that is, defective.

### SUMMARY

It is an object of the present invention to provide an ink set with which a first ink and a second ink are applied over a substrate in the form of a sheet, for example, and which lends itself well to processing of this coated surface, printed matter that lends itself well to the processing of the printing layer formed by the first ink and the second ink, and a molded article that can favorably undergo mechanical processing on the printing layer formed by the first ink and the second ink.

The stated object is achieved by the following aspects of the invention.

An ink set according to one aspect of the present invention includes a first ink containing a pigment as a colorant, and a second ink containing no pigment. A film of the first ink stretches at least 70% when the first ink is cured into the film with a thickness of 5 µm and the film is stretched under a 150°C environment. A film of the second ink has an elastic modulus of no more than 200 MPa when the second ink is cured into the film with a thickness of 50 to 200 µm.

Consequently, stretchability is excellent when a substrate in the form of a sheet, for example, is coated with the first ink and the second ink and this coating surface is subjected to processing.

With the ink set of the above described aspect of the present invention, the first ink and the second ink are preferably applied at the same region on at least a part of a printing medium.

Consequently, processability will be excellent when a substrate in the form of a sheet, for example, is coated and this coating surface is processed.

With the ink set of the above described aspect of the present invention, the first ink and the second ink each preferably contain a polymerizable compound, and in the region of the printing medium coated with the first ink and the second ink, a total weight of the polymerizable compound contained by the first ink is preferably the same as or greater than a total weight of the polymerizable compound contained by the second ink.

Consequently, when a substrate in the form of a sheet, for example, is coated and this coating surface is processed, processability will be even better.

With the ink set of the above described aspect of the present invention, the first ink preferably contains a polymerization initiator and a polymerizable compound, and a monofunctional polymerizable compound accounts for at least 65 wt% of a total weight of the polymerizable compound.

Consequently, the cured coating surface will have excellent stretchability, and processability will be even better.

With the ink set of the above described aspect of the present invention, the second ink preferably contains a polymerization initiator and a polymerizable compound, and a polyfunctional polymerizable compound accounts for at least 50 wt% of a total weight of the polymerizable compound.

Consequently, the cured coating surface will have excellent impact resistance, wear resistance (rubbing resistance), scratch resistance, and solvent resistance, for example, and processability will be even better.

With the ink set of the above described aspect of the present invention, the first ink and the second ink are preferably cured by being irradiated with ultraviolet rays of the same wavelength.

Consequently, the first ink and second ink can be cured together.

With the ink set of the above described aspect of the present invention, the first ink and the second ink are preferably each cured by being irradiated with ultraviolet rays, and the wavelength of the ultraviolet rays is at least 350 nm and no more than 450 nm.

Consequently, the first ink and second ink can be easily and reliably cured together.

With the ink set of the above described aspect of the present invention, the first ink and the second ink each preferably have a viscosity at 40°C of at least 1 mPa•s and no more than 1000 mPa•s.

Consequently, when the first ink and second ink are each discharged by inkjet method, this discharge will be carried out stably.

With the ink set of the above described aspect of the present invention, an equation ((µ₁ - µ₂)/ µ₁) × 100 = ±10 (%) is preferably satisfied, where µ₁ represents a viscosity of the first ink at 40°C, and µ₂ represents a viscosity of the second ink at 40°C.

Consequently, when the first ink and second ink are each discharged by inkjet method, this discharge will be carried out stably.

With the ink set of the above described aspect of the present invention, the first ink and the second ink each preferably have a surface tension at 40°C of at least 5 mN/m and no more than 200 mN/m.

Consequently, when the same region is coated with both the first ink and the second ink, the inks will exhibit the same wetting and spreading behavior in that region, the inks will spread out uniformly, and color unevenness can be prevented.

With the ink set of the above described aspect of the present invention, an equation ((f₁ - f₂)/f₁) × 100 = ±10 (%) is preferably satisfied, where f₁ represents a surface tension of the first ink at 40°C, and f₂ represents a surface tension of the second ink at 40°C.

Consequently, when the same region is coated with both the first ink and the second ink, the inks will exhibit the same wetting and spreading behavior in that region, the inks will spread out uniformly, and color unevenness can be effectively prevented.

With the ink set of the above described aspect of the present invention, the second ink is preferably substantially colorless.

Consequently, even if the first ink and second ink should mix, a change in the original color of the first ink can be suppressed or prevented.

Printed matter according to another aspect of the present invention includes a printing medium, and a printing layer formed on the printing medium by printing and curing a first ink containing a pigment as a colorant, and a second ink containing no pigment. A film of the first ink stretches at least 70% when the first ink is cured into the film with a thickness of 5 µm and the film is stretched under a 150°C environment. A film of the second ink has an elastic modulus of no more than 200 MPa when the second ink is cured into the film with a thickness of 50 to 200 µm.

Consequently, printed matter is obtained that has excellent processability when a printing layer formed by the first ink and the second ink is subjected to processing.

A molded article according to another aspect of the present invention includes printed matter processed by performing mechanical processing, the printed matter having a printing medium and a printing layer formed on the printing medium by printing and curing a first ink containing a pigment as a colorant, and a second ink containing no pigment. A film of the first ink stretches at least 70% when the first ink is cured into the film with a thickness of 5 µm and the film is stretched under a 150°C environment. A film of the second ink has an elastic modulus of no more than 200 MPa when the second ink is cured into the film with a thickness of 50 to 200 µm.

Consequently, a molded article is obtained with which mechanical processing can be carried out favorably on a printing layer formed by the first ink and the second ink.

### BRIEF DESCRIPTION OF THE DRAWINGS

Referring now to the attached drawings which form a part of this original disclosure:

FIG. 1 is a cross section of an embodiment of the ink set of the present invention;

FIG. 2 is a cross section showing the state when a substrate is coated with a first ink and a second ink and the coating is cured;

FIG. 3 is a cross section of an embodiment of the printed matter of the present invention;

FIG. 4 is a cross section of an embodiment of the molded article of the present invention;

FIGS. 5A to 5D are oblique views illustrating the characteristics of the first ink;

FIGS. 6A to 6D are oblique views illustrating the characteristics of the second ink; and

FIG. 7 is a graph of the recovery ratio (displacement recovery/maximum displacement) of a film composed of the first ink, a film composed of the second ink, and a film composed of a mixture of the first ink and the second ink.

### DETAILED DESCRIPTION OF EXEMPLARY EMBODIMENTS

The ink set, printed matter, and molded article of the present invention will now be described in detail on the basis of a preferred embodiment shown in the appended drawings.

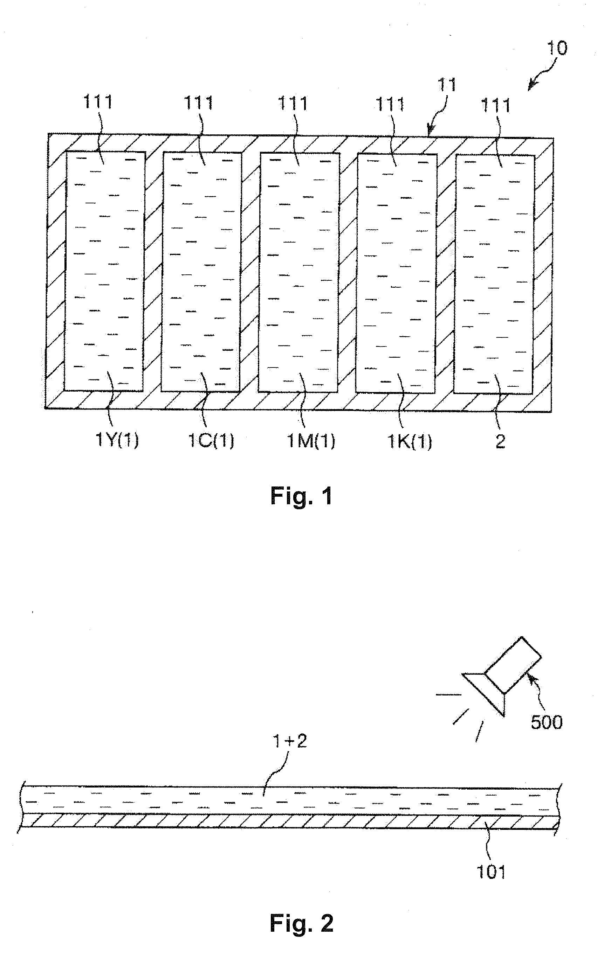

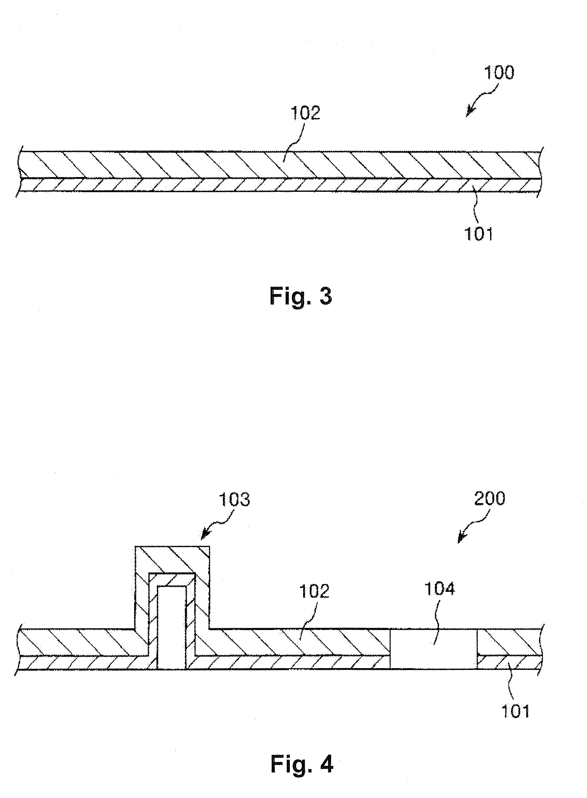

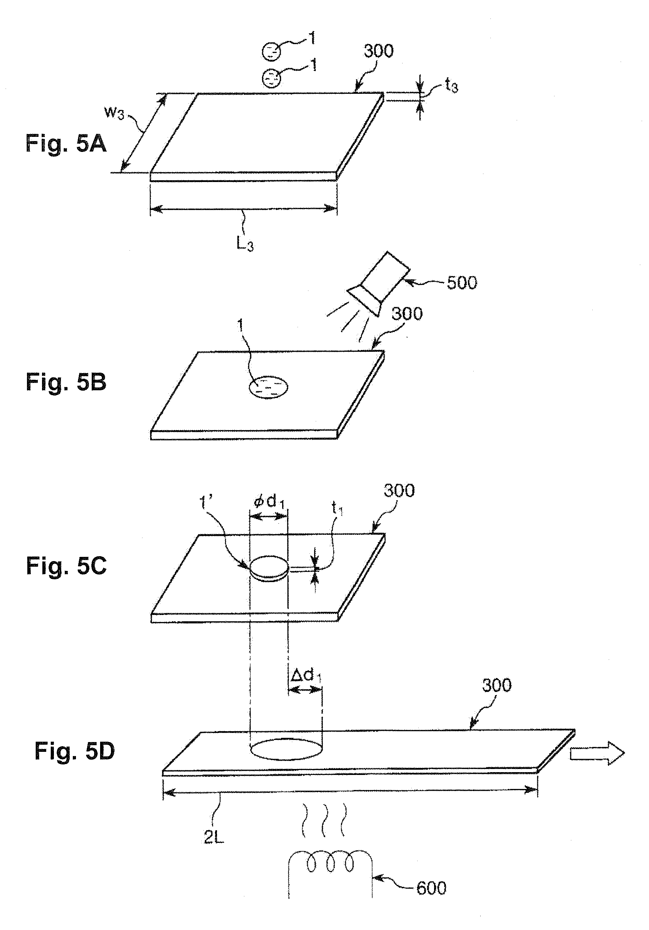

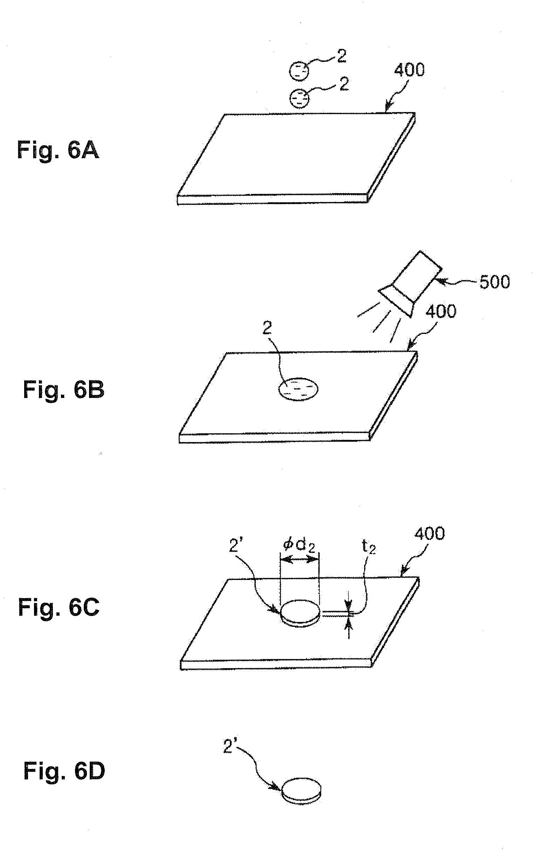

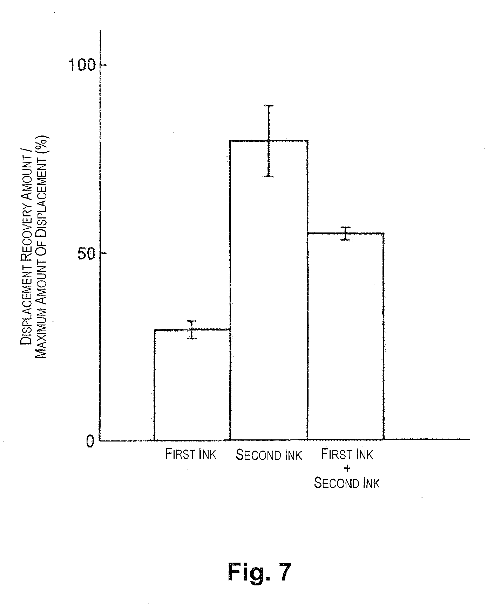

FIG. 1 is a cross section of an embodiment of the ink set of the present invention. FIG. 2 is a cross section showing the state when a substrate is coated with a first ink and a second ink and the coating is cured. FIG. 3 is a cross section of an embodiment of the printed matter of the present invention. FIG. 4 is a cross section of an embodiment of the molded article of the present invention. FIGS. 5A to 5D are oblique views illustrating the characteristics of the first ink. FIGS. 6A to 6D are oblique views illustrating the characteristics of the second ink. FIG. 7 is a graph of the recovery ratio (displacement recovery/maximum displacement) of a film composed of the first ink, a film composed of the second ink, and a film composed of a mixture of the first ink and the second ink. In the following description, the upper side in FIGS. 1 to 6 will be referred to as "upper," and the lower side as "lower."

The ink set 10 shown in FIG. 1 comprises a yellow (Y) first ink 1Y, a cyan (C) first ink 1C, a magenta (M) first ink 1M, a black (K) first ink 1K, and a colorless, transparent second ink 2. In this embodiment, the first inks 1Y, 1C, 1M, and 1K and the second ink 2 are held in an ink tank 11 segmented into five spaces 111, and are discharged as droplets by inkjet method. In the following text, when no distinction is made between the first inks 1Y, 1C, 1M, and 1K, they will sometimes be referred to simply as the "first ink 1." When no distinction is made between the first ink 1 and the second ink 2, they will sometimes be referred to simply as "ink."

This ink set 10 is used in the manufacture of the printed matter 100 shown in FIG. 3. Also, the printed matter 100 serves as the matrix for the molded article 200 shown in FIG. 4. There are no particular restrictions on this molded article 200, but examples include interior automotive parts, such as a speedometer, exterior parts for electrical products, masks, and signs.

The printed matter 100 shown in FIG. 3 is made up of a substrate 101 (serving as a printing medium) and a printing layer 102 provided over the substrate 101. The printing layer 102 is produced by printing with the first ink 1 (that is, an ink of at least one color from among the first inks 1 Y, 1C, 1M, and 1K) and the second ink 2 (see FIG. 2). The supply of the first ink 1 and the second ink 2 onto the substrate 101 is accomplished by discharging the inks as droplets by inkjet onto the substrate 101. The ink on the substrate 101 is then irradiated with ultraviolet rays to cure it and produce the printing layer 102.

The molded article 200 shown in FIG. 4 is produced by subjecting the printed matter 100 to mechanical processing. There are no particular restrictions on the mechanical processing, but examples include drawing, bending, and other types of deformation processing, as well as punching, cutting, and other types of shear processing. With the depicted configuration, a portion 103 in the form of a bottomed cylinder is formed by drawing a portion of the printed matter 100 where the printing layer 102 is formed. Also, an opening 104 is formed by punching out a portion of the printed matter 100 where the printing layer 102 is formed, at a different location from that of the bottomed cylinder portion 103.

The ink set 10 will be described first.

### Ink Set

The ink set 10 comprises the first ink 1, which is a UV-curing ink containing a pigment as a colorant, and the second ink 2, which is a radiation-curing ink containing no pigment.

A radiation-curing ink needs to cure at high sensitivity in order to form an image of high quality. Increasing the sensitivity of an ink affords better curing by irradiation with active radiation, and therefore offers a variety of advantages, such as a reduction in power consumption and a longer service life due to reduced load on the active radiation generation apparatus, as well as less volatilization of uncured low-molecular weight substances, less decrease in the strength of the formed image, and so forth.

The first ink 1 preferably contains a polymerization initiator (a-1) and a polymerizable compound (b-1) (first polymerizable compound), and a monofunctional polymerizable compound (hereinafter also referred to as monofunctional monomer) preferably accounts for at least 65 wt% of the total weight of the polymerizable compound (b-1).

The second ink 2 preferably contains a polymerization initiator (a-2) and a polymerizable compound (b-2) (second polymerizable compound), and a polyfunctional polymerizable compound (hereinafter also referred to as polyfunctional monomer) preferably accounts for at least 50 wt% of the total weight of the polymerizable compound (b-2).

The weight ratio of the monofunctional polymerizable compound to the total weight of the polymerizable compound in the ink is also called the "monofunctional monomer ratio," and the weight ratio of the polyfunctional polymerizable compound to the total weight of the polymerizable compound in the ink is also called the "polyfunctional monomer ratio." The monofunctional monomer ratio (%) and the polyfunctional monomer ratio (%) are rounded off at the decimal point.

The ink is a radiation-curing ink that can be cured by irradiation with active radiation. There are no particular restrictions on the term "active radiation" here, so long as it is active radiation capable of imparting enough energy by its irradiation to generate initiation seeds in the ink, and the term broadly encompasses alpha rays, gamma rays, X rays, ultraviolet rays (UV), visible light rays, electron beams, and the like, but of these, ultraviolet rays and electron beams are preferable in terms of curing sensitivity and ready availability of the apparatus, and ultraviolet rays are particularly favorable. Therefore, it is preferable if the ink can be cured by being irradiated with radiation.

The various components of the ink will now be described.

### (a) Polymerization Initiator

A known radical polymerization initiator or a known cationic polymerization initiator can be used as the polymerization initiator here. A single type of polymerization initiator may be used, or two or more types may be used together. Also, a radical polymerization initiator and a cationic polymerization initiator may be used together.

A polymerization initiator is a compound that generates polymerization initiation seeds by absorbing external energy. The external energy used to initiate polymerization is broadly broken down into heat and active radiation, and a thermal polymerization initiator and an optical polymerization initiator are used for each. Examples of active radiation include gamma rays, beta rays, electron beams, ultraviolet rays, visible light rays, and infrared rays.

If a radical polymerizable compound is used as the polymerization initiator in the ink, a radical polymerization initiator is preferably contained, and if a cationic polymerizable compound is used as the polymerizable compound, a cationic polymerization initiator is preferably contained.

### Radical Polymerization Initiator

Examples of radical polymerization initiators include aromatic ketones, acylphosphine compounds, aromatic onium salt compounds, organic peroxides, thio compounds, hexa-arylbiimidazole compounds, ketooxime ester compounds, borate compounds, azinium compounds, metallocene compounds, active ester compounds, compounds containing carbon-halogen bonds, and alkylamine compounds. For these radical polymerization initiators, the above compounds may be used alone or in combination. The radical polymerization initiators here may be used alone or in combinations of two or more types.

### Cationic Polymerization Initiator

The compounds used in chemical amplification photoresists and optical cationic polymerization can be used as a cationic polymerization initiator (optical acid generator) (see "Imaging-Use Organic Materials," Organic Electronics Materials Conference edition, published by Bunshin (1993), pp. 187-192).

Firstly, examples include B(C₆F₅)₄⁻, PF₆⁻, AsF₆⁻, SbF₆⁻, and CF₃SO₃⁻ salts of diazonium, ammonium, iodonium, sulfonium, phosphonium, and other such aromatic onium compounds. Secondly, examples include sulfonation compounds which generate sulfonic acid. Thirdly, examples include halides which generate hydrogen halides. Fourthly, examples include iron arene complexes.

It is also preferable if the total amount in which the polymerization initiator is used is 0.01 to 35 wt% with respect to the total amount in which the polymerizable compounds are used, with a range of 0.5 to 20 wt% being more preferable, and 1.0 to 20 wt% being even better. If the amount is at least 0.01 wt%, the ink can be sufficiently cured, and if the amount is no more than 35 wt%, a cured film with a uniform degree of curing can be obtained.

Also, when a sensitizer (discussed below) is used in the ink, the total amount in which the polymerizable compounds are used is preferably such that the weight ratio between the polymerization initiator and the sensitizer is from 200:1 to 1:200, and more preferably 50:1 to 1:50, and even more preferably 20:1 to 1:5.

### (b) Polymerizable Compound

The ink contains a polymerizable compound.

The polymerizable compound preferably has a molecular weight of 1000 or less, with 50 to 800 being more preferable, and 60 to 500 being even better.

Also, there are no particular restrictions on the polymerizable compound as long as imparting some kind of energy brings about a polymerization reaction, such as a radical polymerization reaction, cationic polymerization reaction, or anionic polymerization reaction, and cures the compound. Monomers, oligomers, and polymers can be used irrespectively, but in particular, various kinds of polymerizable compound known as photo-polymerizable compounds can be used that induce a polymerization reaction by means of an initiation seed generated by the above-mentioned polymerization initiator.

Radical polymerizable compounds and cationic polymerizable compound are favorable examples of polymerizable compounds.

### Radical Polymerizable Compound

There are no particular restrictions on the radical polymerizable compound, and any known radical polymerizable compound can be used, but it is preferably an ethylenic unsaturated compound, and more preferably is a (meth)acrylate compound, a (meth)acrylamide compound, an N-vinyl compound, and/or a vinyl ether compound, and even more preferably a (meth)acrylate compound and/or an N-vinyl compound. The term "(meth)acrylic" here means both acrylic and methacrylic.

When a radical polymerizable compound is used for the first ink 1, the first ink 1 is preferably such that a monofunctional radical polymerizable compound accounts for 67 to 100 wt% of the total weight of the polymerizable compound (b-1), with 70 to 100 wt% being more preferable, and 85 to 95 wt% being even more preferable. Within the above range, the printing layer 102 will have good stretchability.

When a radical polymerizable compound is used for the second ink 2, the second ink 2 is preferably such that a polyfunctional radical polymerizable compound accounts for 55 to 100 wt% of the total weight of the polymerizable compound (b-2), with 60 to 100 wt% being more preferable, 80 to 100 wt% being even more preferable, and 100 wt% (that is, all of the polymerizable compound (b-2) being a polyfunctional radical polymerizable compound) being particularly favorable. Within the above range, the printing layer 102 will have excellent impact resistance, wear resistance (rubbing resistance), scratch resistance, and solvent resistance. In this Specification, impact resistance, wear resistance (rubbing resistance), scratch resistance, and solvent resistance will sometimes be collectively referred to as "durability."

Also, the radical polymerizable compound may be either monofunctional or polyfunctional.

A monofunctional radical polymerizable compound is preferably an N-vinyl compound (discussed below), and more preferably an N-vinyl lactam.

Also, when a radical polymerizable compound is used as the polymerizable compound (b-1) in the first ink 1, the first ink preferably includes an N-vinyl compound (discussed below), and more preferably includes an N-vinyl lactam.

A polyfunctional (meth)acrylate compound (discussed below) is favorable as a polyfunctional radial polymerizable compound. The term "(meth)acrylate" here means both acrylate and methacrylate.

It is preferable to use a combination of a bifunctional radical polymerizable compound and a trifunctional or higher radical polymerizable compound as the polyfunctional radial polymerizable compound, and it is more preferable to use a combination of a bifunctional radical polymerizable compound and a trifunctional radical polymerizable compound.

When a radical polymerizable compound is used as the polymerizable compound (b-2) in the second ink 2, the second ink 2 is preferably such that a bifunctional radical polymerizable compound accounts for 30 to 100 wt% of the total weight of the polymerizable compound (b-2), with a range of 50 to 95 wt% being more preferable, and 70 to 90 wt% being even better. Also, the second ink 2 is preferably such that a trifunctional or higher radical polymerizable compound accounts for 5 to 50 wt% of the total weight of the polymerizable compound (b-2), with a range of 10 to 30 wt% being more preferable. Furthermore, the second ink 2 is preferably such that a trifunctional radical polymerizable compound accounts for 5 to 50 wt% of the total weight of the polymerizable compound (b-2), with a range of 10 to 30 wt% being more preferable.

When a radical polymerizable compound is used for the first ink 1, the first ink 1 is preferably such that a monofunctional radical polymerizable compound accounts for 50 to 95 wt% of the total weight of the first ink 1, with a range of 55 to 90 wt% being more preferable, and 60 to 85 wt% being even better. Within the above range, the printing layer 102 will have good stretchability (flexibility).

When a radical polymerizable compound is used for the second ink 2, the second ink 2 is preferably such that a polyfunctional radical polymerizable compound accounts for 50 to 98 wt% of the total weight of the second ink 2, with a range of 55 to 95 wt% being more preferable, and 60 to 90 wt% being even better. Within the above range, the printing layer 102 will have excellent durability.

Monofunctional radical polymerizable compounds and polyfunctional radical polymerizable compounds will now be described.

### Monofunctional Radical Polymerizable Monomer

A monofunctional radical polymerizable monomer can be used as a radical polymerizable compound.

Favorable examples of monofunctional radical polymerizable compounds include monofunctional acrylate compounds, monofunctional methacrylate compounds, monofunctional N-vinyl compounds, monofunctional acrylamide compounds, and monofunctional methacrylamide compounds, with monofunctional acrylate compounds, monofunctional methacrylate compounds, and monofunctional N-vinyl compounds being more preferable.

When the first ink 1 contains a monofunctional radical polymerizable compound, the monofunctional radical polymerizable compound is preferably a combination of a monofunctional acrylate compound and a monofunctional N-vinyl compound, or of a monofunctional methacrylate compound and a monofunctional N-vinyl compound, and a combination of a monofunctional acrylate compound and a monofunctional N-vinyl compound is particularly favorable.

A monomer having a cyclic structure and having one ethylenic unsaturated double bond group selected from the group consisting of an acryloxy group, a methacryloxy group, an acrylamide group, a methacrylamide group, and an N-vinyl group is preferably used as the monofunctional radical polymerizable compound.

An ethylenic unsaturated compound is an example of a radical polymerizable monomer that can be used favorably.

Favorable examples of monofunctional acrylates, monofunctional methacrylates, monofunctional vinyloxy compounds, monofunctional acrylamides, and monofunctional methacrylamides include monofunctional radical polymerizable monomers having a cyclic structure such as a phenyl group, a naphthyl group, an anthracenyl group, a pyridinyl group, a tetrahydrofurfuryl group, a piperidinyl group, a cyclohexyl group, a cyclopentyl group, a cycloheptyl group, an isoboronyl group, or a tricyclodecanyl group.

Favorable examples of monofunctional radical polymerizable monomers include norbornyl (meth)acrylate, isoboronyl (meth)acrylate, cyclohexyl (meth)acrylate, cyclopentyl (meth)acrylate, cycloheptyl (meth)acrylate, cyclooctyl (meth)acrylate, cyclodecyl (meth)acrylate, dicyclodecylyl (meth)acrylate, trimethylcyclohexylyl (meth)acrylate, 4-6-butylcyclohexylyl (meth)acrylate, acryloyl morpholine, 2-benzyl (meth)acrylate, phenoxyethyl (meth)acrylate, phenoxydiethylene glycol (meth)acrylate, phenoxytriethylene glycol (meth)acrylate, EO-modified cresol (meth)acrylate, tetrahydrofurfuryl (meth)acrylate, caprolactone-modified tetrahydrofurfuryl (meth)acrylate, nonylphenoxyethylene glycol (meth)acrylate, neopentyl glycol benzoate (meth)acrylate, para-cumylphenoxyethylene glycol (meth)acrylate, N-phthalimide ethyl (meth)acrylate, pentamethylpiperidyl (meth)acrylate, tetramethylpiperidyl (meth)acrylate, N-cyclohexylacrylamide, N-(1,1-dimethyl-2-phenyl)ethylacrylamide, N-diphenylmethylacrylamide, N-phthalimide methylacrylamide, N-(1,1'-dimethyl-3-(1,2,4-triazol-1-yl))propylacrylamide, and 5-(meth)acryloyloxymethyl-5-ethyl-l,3dioxacyclohexane.

It is preferable if a radical polymerizable monomer having an N-vinyl group and having a group with a cyclic structure is used as the monofunctional radical polymerizable monomer. Of these, it is preferable to use N-vinylcarbaszole, 1-vinylimidazole, or an N-vinyl lactam, and more preferable to use an N-vinyl lactam.

The first ink 1 preferably contains a monofunctional cyclic polymerizable monomer having an N-vinyl group, in an amount of up to 40 wt% of the entire first ink 1, and more preferably in an amount of 10 to 35 wt%, and even more preferably 12 to 30 wt%. Within the above range, good copolymerizability with other polymerizable compounds will be exhibited, and an ink with excellent curability and blocking resistance will be obtained.

The first ink 1 also preferably contains a monofunctional N-vinyl lactam in an amount of 1 to 40 wt% of the entire first ink 1, and more preferably in an amount of 10 to 35 wt%, and even more preferably 12 to 30 wt%.

If the amount in which the monofunctional N-vinyl lactam is used is within the above numerical value range, the curability, cured film flexibility, and adhesion of the cured film to the support will all be excellent. Also, an N-vinyl lactam is a compound with a relatively high melting point. It is preferable for the N-vinyl lactam content to be 40 wt% or less because the ink will exhibit good solubility even at low temperatures of 0°C or lower, and the ink can be handled over a wider range of temperatures.

One of the following acyclic monofunctional monomers can also be used as the monofunctional radical polymerizable monomer. A acyclic monofunctional monomer has a relatively low viscosity, and can also be used favorably for the purpose of lowering the viscosity of the ink, for example. However, from the standpoints of reducing the tackiness of the cured film and obtaining a film that is strong enough that it will not be scratched, etc., during molding and processing, it is preferable for the proportion of the entire ink accounted for by the following acyclic monofunctional monomers to be no more than 20 wt%. 15 wt% or less is even better.

Specific examples include octyl (meth)acrylate, 2-ethylhexyl (meth)acrylate, decyl (meth)acrylate, dodecyl (meth)acrylate, tridecyl (meth)acrylate, tetradecyl (meth)acrylate, hexadecyl (meth)acrylate, 2-hydroxyethyl (meth)acrylate, butoxyethyl (meth)acrylate, carbitol (meth)acrylate, 2-ethylhexyl diglycol (meth)acrylate, polyethylene glycol (meth)acrylate monomethyl ether, polypropylene glycol (meth)acrylate monomethyl ether, and polytetraethylene glycol (meth)acrylate monomethyl ether.

Further examples include (poly)ethylene glycol mono(meth)acrylate, (poly)ethylene glycol (meth)acrylate methyl ester, (poly)ethylene glycol (meth)acrylate ethyl ester, (poly)ethylene glycol (meth)acrylate phenyl ester, (poly)propylene glycol mono(meth)acrylate, (poly)propylene glycol mono(meth)acrylate phenyl ester, (poly)propylene glycol (meth)acrylate methyl ester, (poly)propylene glycol (meth)acrylate ethyl ester, 2-ethylhexyl acrylate, n-octyl acrylate, n-nonyl acrylate, n-decyl acrylate, isooctyl acrylate, n-lauryl acrylate, n-tridecyl acrylate, n-cetyl acrylate, n-stearyl acrylate, 2-hydroxyethyl acrylate, butoxyethyl acrylate, tetrahydrofurfuryl acrylate, benzyl acrylate, oligoester acrylate, N-methylolacrylamide, diacetone acrylamide, epoxy acrylate, methyl methacrylate, n-butyl methacrylate, 2-ethylhexyl methacrylate, n-octyl methacrylate, n-nonyl methacrylate, n-decyl methacrylate, isooctyl methacrylate, n-lauryl methacrylate, n-tridecyl methacrylate, n-cetyl methacrylate, n-stearyl methacrylate, allyl methacrylate, glycidyl methacrylate, benzyl methacrylate, dimethylaminomethyl methacrylate, and allyl glycidyl ether.

Further examples include 2-ethylhexyl-glycol acrylate, 2-hydroxy-3-phenoxypropyl acrylate, 2-hydroxybutyl acrylate, 2-acryloyloxyethylphthalic acid, 2-acryloyloxyethyl-2-hydroxyethylphthalic acid, ethoxylated phenyl acrylate, 2-acryloyloxyethylsuccinic acid, 2-acryloyloxyethylhexahydrophthalic acid, lactone-modified flexible acrylate, butoxyethyl acrylate, 2-hydroxyethyl acrylate, and methoxydipropylene glycol acrylate.

### Polyfunctional Radical Polymerizable Compound

A polyfunctional radical polymerizable monomer can be used as the radical polymerizable compound.

Favorable examples of polyfunctional radical polymerizable monomers include polyfunctional polymerizable monomers having two or more ethylenic unsaturated double bonds selected from the group consisting of an acryloyloxy group, a methacryloyloxy group, an acrylamide group, a methacrylamide group, a vinyloxy group, and an N-vinyl group. An ink that gives high cured film strength will be obtained if a polyfunctional polymerizable monomer is contained.

Favorable examples of polyfunctional radical polymerizable monomers having ethylenic unsaturated bonds that can undergo radical polymerization include acrylic acid, methacrylic acid, itaconic acid, crotonic acid, isocrotonic acid, maleic acid, and other such unsaturated carboxylic acids and salts thereof, anhydrides having an ethylenic unsaturated group, acrylonitrile, styrene, and, furthermore, compounds that are (meth)acrylic acid esters and have two or more ethylenic unsaturated groups, such as various types of unsaturated polyesters, unsaturated polyethers, unsaturated polyamides, unsaturated urethane (meth)acrylic monomers or prepolymers, epoxy monomers or prepolymers, and urethane monomers or prepolymers.

Specific examples include neopentyl glycol di(meth)acrylate, (poly)ethylene glycol di(meth)acrylate, diethylene glycol di(meth)acrylate, triethylene glycol di(meth)acrylate, tetraethylene glycol di(meth)acrylate, polypropylene glycol di(meth)acrylate, (poly)tetramethylene glycol di(meth)acrylate, bisphenol A propylene oxide (PO) adduct di(meth)acrylate, ethoxylated neopentyl glycol di(meth)acrylate, propoxylated neopentyl glycol di(meth)acrylate, bisphenol A ethylene oxide (EO) adduct di(meth)acrylate, EO-modified pentaerythritol tri(meth)acrylate, PO-modified pentaerythritol tri(meth)acrylate, EO-modified pentaerythritol tetra(meth)acrylate, PO-modified pentaerythritol tetra(meth)acrylate, EO-modified dipentaerythritol tetra(meth)acrylate, PO-modified dipentaerythritol tetra(meth)acrylate, EO-modified trimethylolpropane tri(meth)acrylate, PO-modified trimethylolpropane tri(meth)acrylate, EO-modified tetramethylolmethane tetra(meth)acrylate, PO-modified tetramethylolmethane tetra(meth)acrylate, pentaerythritol tri(meth)acrylate, pentaerythritol tetra(meth)acrylate, dipentaerythritol tetra(meth)acrylate, trimethylolpropane tri(meth)acrylate, tetramethylolmethane tetra(meth)acrylate, trimethylolethane tri(meth)acrylate, trimethylolpropane tri(meth)acrylate, bis(4-(meth)acryloxypolyethoxyphenyl)propane, diallyl phthalate, triallyl trimellitate, 1,6-hexanediol di(meth)acrylate, 1,9-nonanediol di(meth)acrylate, 1,10-decanediol di(meth)acrylate, neopentyl glycol hydroxypivalate di(meth)acrylate, tetramethylolmethane tri(meth)acrylate, dimethyloltricyclodecane di(meth)acrylate, modified glycerol tri(meth)acrylate, bisphenol A diglycidyl ether (meth)acrylic acid adduct, modified bisphenol A di(meth)acrylate, caprolactone-modified dipentaerythritol hexa(meth)acrylate, dipentaerythritol hexa(meth)acrylate, pentaerythritol tri(meth)acrylate tolylene diisocyanate urethane prepolymer, pentaerythritol tri(meth)acrylate hexamethylene diisocyanate urethane prepolymer, pentaerythritol tri(meth)acrylate hexamethylene diisocyanate urethane prepolymer, ditrimethylolpropane tetra(meth)acrylate, and pentaerythritol tri(meth)acrylate hexamethylene diisocyanate urethane prepolymer. More specifically, the commercially available products discussed in "Kakyozai Handobukku" (Handbook of Crosslinking Agents), edited by S. Yamashita (Taiseisha, 1981); *"*UV•EB Koka Handobukku (Genryo Hen)" (Handbook of UV/EB Curing (Raw Materials)), edited by K. Kato (Kobunshi Kankoukai, 1985); *"*UV•EB Koka Gijutsu no Oyo to Shijo" (Application and Market for UV/EB Curing Technology), p. 79, edited by Rad Tech Kenkyukai (CMC, 1989); and E. Takiyama "Poriesuteru Jushi Handobukku" (Handbook of Polyester Resins) (The Nikkan Kogyo Shimbun Ltd., 1988), or radical polymerizable or crosslinkable monomers, oligomers, and polymers known in the field, can be used.

Of these, the following are preferred examples of the polyfunctional radical polymerizable monomer.

Preferred examples of difunctional radical polymerizable monomers include ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di(meth)acrylate, tetrapropylene glycol di(meth)acrylate, polypropylene glycol di(meth)acrylate, ethoxylated neopentyl glycol diacrylate, and propoxylated neopentyl glycol diacrylate.

A vinyl ether compound can also be used favorably as a radical polymerizable compound.

The monomers listed above as radical polymerizable compounds have high reactivity, low viscosity, and excellent adhesion to a support.

### Cationic Polymerizable Compound

From the standpoint of curability and wear resistance, an oxetane ring-containing compound and an oxirane ring-containing compound are suitable as the cationic polymerizable compound, and a mode in which both an oxetane ring-containing compound and an oxirane ring-containing compound are contained is more preferable.

The term "oxirane ring-containing compound" (hereinafter also called an "oxirane compound") here is a compound containing at least one oxirane ring (oxiranyl group, epoxy group) in its molecule, and specifically, it may be selected as appropriate from those usually used as epoxy resins, examples of which include conventionally known aromatic epoxy resins, alicyclic epoxy resins, and aliphatic epoxy resins. It may be either a monomer, an oligomer, or a polymer.

Also, the term "oxetane ring-containing compound" (hereinafter also called an "oxetane compound") is a compound containing at least one oxetane ring (oxetanyl group) in its molecule.

When a cationic polymerizable compound is used in the first ink 1, the first ink 1 is preferably such that 65 to 95 wt % of the total weight of the polymerizable compound (b-1) is accounted for by a monofunctional cationic polymerizable compound, with a range of 65 to 85 wt% being more preferable, and 65 to 75 wt% being even better. Within the above range, the printing layer 102 will have excellent flexibility.

When a cationic polymerizable compound is used in the second ink 2, the second ink 2 is preferably such that 50 to 90 wt% of the total weight of the polymerizable compound (b-2) is accounted for by a polyfunctional cationic polymerizable compound, with a range of 52 to 75 wt% being more preferable, and 55 to 65 wt% being even better. Within the above range, the printing layer 102 will have excellent durability.

The cationic polymerizable compound may be either monofunctional or polyfunctional.

A monofunctional oxirane compound and/or a monofunctional oxetane compound is preferable as the monofunctional cationic polymerizable compound.

A difunctional cationic polymerizable compound is preferable as the polyfunctional cationic polymerizable compound. A polyfunctional oxirane compound and/or a polyfunctional oxetane compound is preferable as the polyfunctional cationic polymerizable compound, and it is more preferable to use a polyfunctional oxirane compound and a polyfunctional oxetane compound together.

When a cationic polymerizable compound is used in the first ink 1, the first ink 1 is preferably such that 40 to 95 wt% of the total weight of the first ink 1 is accounted for by a monofunctional cationic polymerizable compound, with a range of 45 to 80 wt% being more preferable, and 45 to 65 wt% being even better. Within the above range, the printing layer 102 will have excellent flexibility.

When a cationic polymerizable compound is used in the second ink 2, the second ink 2 is preferably such that 35 to 90 wt% of the total weight of the second ink 2 is accounted for by a polyfunctional cationic polymerizable compound, with a range of 38 to 75 wt% being more preferable, and 40 to 60 wt% being even better. Within the above range, the printing layer 102 will have excellent durability.

The monofunctional cationic polymerizable compound and the polyfunctional cationic polymerizable compound will now be described in detail.

Examples of cationic polymerizable compounds include the epoxy compounds, vinyl ether compounds, oxetane compounds, and so forth discussed in Japanese Laid-Open Patent Applications H6-9714, 2001-31892, 2001-40068, 2001-55507, 2001-310938, 2001-310937, 2001-220526, etc.

Examples of monofunctional epoxy compounds include phenyl glycidyl ether, p-tert-butylphenyl glycidyl ether, butyl glycidyl ether, 2-ethylhexyl glycidyl ether, allyl glycidyl ether, 1,2-butylene oxide, 1,3-butadiene monoxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, and 3-vinylcyclohexene oxide.

Examples of polyfunctional epoxy compounds include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl)-7,8-epoxy-1,3-dioxaspiro [5.5]undecane, bis(3,4-epoxycyclohexylmethyl) adipate, vinylcyclohexene oxide, 4-vinylepoxycyclohexane, bis(3,4-epoxy-6-methylcyclohexylmethyl) adipate, 3,4-epoxy-6-methylcyclohexyl-3',4'-epoxy-6'-methylcyclohexane carboxylate, methylenebis(3,4-epoxycyclohexane), dicyclopentadiene diepoxide, a di(3,4-epoxycyclohexylmethyl) ether of ethylene glycol, ethylenebis(3,4-epoxycyclohexane carboxylate), dioctyl epoxyhexahydrophthalate, di-2-ethylhexyl epoxyhexahydrophthalate, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, 1,13-tetradecadiene dioxide, limonene dioxide, 1,2,7,8-diepoxyoctane, and 1,2,5,6-diepoxycyclooctane.

Of these epoxy compounds, aromatic epoxides and alicyclic epoxides are preferable from the standpoint of excellent curing speed, and alicyclic epoxides are particularly preferable.

Examples of monofunctional oxetane compounds include 3-ethyl-3-hydroxymethyloxetane, 3-(meth)allyloxymethyl-3-ethyloxetane, (3-ethyl-3-oxetanylmethoxy)methylbenzene, 4-fluoro-[1-(3-ethyl-3-oxetanylmethoxy)methyl]benzene, 4-methoxy-[1-(3-ethyl-3-oxetanylmethoxy)methyl]benzene, [1-(3-ethyl-3-oxetanylmethoxy)ethyl]phenyl ether, isobutoxymethyl (3-ethyl-3-oxetanylmethyl) ether, isobornyloxyethyl (3-ethyl-3-oxetanylmethyl) ether, isobornyl (3-ethyl-3-oxetanylmethyl) ether, 2-ethylhexyl (3-ethyl-3-oxetanylmethyl) ether, ethyl diethylene glycol (3-ethyl-3-oxetanylmethyl) ether, dicyclopentadiene (3-ethyl-3-oxetanylmethyl) ether, dicyclopentenyloxyethyl (3-ethyl-3-oxetanylmethyl) ether, dicyclopentenyl (3-ethyl-3-oxetanylmethyl) ether, tetrahydrofurfuryl (3-ethyl-3-oxetanylmethyl) ether, tetrabromophenyl (3-ethyl-3-oxetanylmethyl) ether, 2-tetrabromophenoxyethyl (3-ethyl-3-oxetanylmethyl) ether, tribromophenyl (3-ethyl-3-oxetanylmethyl) ether, 2-tribromophenoxyethyl (3-ethyl-3-oxetanylmethyl) ether, 2-hydroxyethyl (3-ethyl-3-oxetanylmethyl) ether, 2-hydroxypropyl (3-ethyl-3-oxetanylmethyl) ether, butoxyethyl (3-ethyl-3-oxetanylmethyl) ether, pentachlorophenyl (3-ethyl-3-oxetanylmethyl) ether, pentabromophenyl (3-ethyl-3-oxetanylmethyl) ether, and bornyl (3-ethyl-3-oxetanylmethyl) ether.

Examples of polyfunctional oxetane compounds include polyfunctional 3,7-bis(3-oxetanyl)-5-oxanonane, 3,3'-(1,3-(2-methylenyl)propanediylbis(oxymethylene))bis(3-ethyloxetane), 1,4-bis[(3-ethyl-3-oxetanylmethoxy)methyl]benzene, 1,2-bis[(3-ethyl-3-oxetanylmethoxy)methyl] ethane, 1,3-bis[(3-ethyl-3-oxetanylmethoxy)methyl]propane, ethylene glycol bis(3-ethyl-3-oxetanylmethyl) ether, dicyclopentenylbis(3-ethyl-3-oxetanylmethyl) ether, triethylene glycol bis(3-ethyl-3-oxetanylmethyl) ether, tetraethylene glycol bis(3-ethyl-3-oxetanylmethyl) ether, tricyclodecanediyldimethylene(3-ethyl-3-oxetanylmethyl) ether, trimethylolpropane tris(3-ethyl-3-oxetanylmethyl) ether, 1,4-bis(3-ethyl-3-oxetanylmethoxy)butane, 1,6-bis(3-ethyl-3-oxetanylmethoxy)hexane, pentaerythritol tris(3-ethyl-3-oxetanylmethyl) ether, pentaerythritol tetrakis(3-ethyl-3-oxetanylmethyl) ether, polyethylene glycol bis(3-ethyl-3-oxetanylmethyl) ether, dipentaerythritol hexakis(3-ethyl-3-oxetanylmethyl) ether, dipentaerythritol pentakis(3-ethyl-3-oxetanylmethyl) ether, dipentaerythritol tetrakis(3-ethyl-3-oxetanylmethyl) ether, caprolactone-modified dipentaerythritol hexakis(3-ethyl-3-oxetanylmethyl) ether, caprolactone-modified dipentaerythritol pentakis(3-ethyl-3-oxetanylmethyl) ether, ditrimethylolpropane tetrakis(3-ethyl-3-oxetanylmethyl) ether, EO-modified bisphenol A bis(3-ethyl-3-oxetanylmethyl) ether, PO-modified bisphenol A bis(3-ethyl-3-oxetanylmethyl) ether, EO-modified hydrogenated bisphenol A bis(3-ethyl-3-oxetanylmethyl) ether, PO-modified hydrogenated bisphenol A bis(3-ethyl-3-oxetanylmethyl) ether, and EO-modified bisphenol F (3-ethyl-3-oxetanylmethyl) ether.

These cationic polymerizable compounds may be used alone, or two or more types may be used in combination.

The total weight of polymerizable compound in the ink is preferably 55 to 95 wt%, and more preferably 60 to 90 wt%, with respect to the total weight of the ink. Within the above range, curability will be excellent and the viscosity will be appropriate.

There are no particular restrictions on the method for manufacturing the polymerizable compound, and this compound can be synthesized by any known method. If available, a commercial product may be used.

### (c) Colorant

The first ink 1 contains a pigment as a colorant. Pigments have excellent weather resistance and good color reproducibility. Also, from the standpoint of no lower the sensitivity of the curing reaction by active radiation, a pigment (colorant) that can be used favorably in the ink is preferably selected from among those compounds that do not function as a polymerization inhibitor in the polymerization reaction (the curing reaction).

There are no particular restrictions on the pigment, but the following organic and inorganic pigments listed in the Color Index can be used, for example.

The following pigments can be used according to the intended object, for example.

As a red or magenta pigment: Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36;

As a blue or cyan pigment: Pigment Blue 1, 15, 15:1, 15:2, 15:3, 15:4, 15:6, 16, 17-1, 22, 27, 28, 29, 36, or 60;

As a green pigment: Pigment Green 7, 26, 36, or 50;

As a yellow pigment: Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, or 193;

As a black pigment: Pigment Black 7, 28, or 26; and

As a white pigment: Pigment White 6, 18, or 21.

The colorant is preferably added to the ink or the inkjet recording ink and then suitably dispersed in the ink. To disperse the colorant, any of various dispersing machines, such as a ball mill, a sand mill, an attritor, a roll mill, an agitator, a Henschel mixer, a colloidal mill, an ultrasonic homogenizer, a pearl mill, a wet jet mill, or a paint shaker, can be used, for example.

The colorant may be added directly along with the other components in the preparation of the ink, but in order to improve dispersibility it may be added in advance to a solvent or to a dispersing medium such as a radical polymerizable compound, uniformly dispersed or dissolved, and then blended.

### (d) Dispersant

The ink preferably contains a dispersant in order to disperse the pigment stably in the ink.

A macromolecular dispersant is preferable as the dispersant. The term "macromolecular dispersant" means a dispersant having a weight-average molecular weight of 1000 or higher.

Examples of macromolecular dispersants include DisperBYK-101, DisperBYK-102, DisperBYK-103, DisperBYK-106, DisperBYK-111, DisperBYK-161, DisperBYK-162, DisperBYK-163, DisperBYK-164, DisperBYK-166, DisperBYK-167, DisperBYK-168, DisperBYK-170, DisperBYK-171, DisperBYK-174, and DisperBYK-182 (all made by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (all made by EFKA Additives), Disperse Aid 6, Disperse Aid 8, Disperse Aid 15, and Disperse Aid 9100 (made by San Nopco Limited), and other such macromolecular dispersants; various kinds of Solsperse dispersants such as Solsperse 3000, 5000, 9000, 12000, 13240, 13940, 17000, 22000, 24000, 26000, 28000, 32000, 36000, 39000, 41000, and 71000 (made by Avecia); Adeka Pluronic L31, F38, L42, L44, L61, L64, F68, L72, P95, F77, P84, F87, P94, L101, P103, F108, L121, and P-123 (made by Adeka Corporation), Isonet S-20 (made by Sanyo Chemical Industries, Ltd.), and Disparlon KS-860, 873SN, 874 (macromolecular dispersant), #2150 (aliphatic polycarboxylic acid), and #7004 (polyether ester type) (made by Kusumoto Chemicals, Ltd.).

The amount in which the dispersant is contained in the ink is suitably selected according to the intended use, but is preferably 0.05 to 15 wt% with respect to the total weight of the ink.

### (e) Other Components

Other components besides those mentioned above can be added as necessary to the ink.

Examples of other components include sensitizers, cosensitizers, surfactants, UV absorbents, antioxidants, antifading agents, conductive salts, solvents, macromolecular compounds, and basic compounds.

In addition to the above, the ink may contain as necessary, for example, a leveling additive, a matting agent, a wax for adjusting film properties, or a tackifier (one that does not inhibit polymerization) to improve the adhesion to a support made of polyolefin, PET, or the like.

Specific examples of the tackifier include the high-molecular weight adhesive polymers mentioned on pp. 5 and 6 of Japanese Laid-Open Patent Application 2001-49200 (such as a copolymer composed of an ester of (meth)acrylic acid and an alcohol having an alkyl group with 1 to 20 carbons, an ester of (meth)acrylic acid and an alicyclic alcohol having 3 to 14 carbons, or an ester of (meth)acrylic acid and an aromatic alcohol having 6 to 14 carbons), and a low-molecular weight tackifying resin having a polymerizable unsaturated bond.

The first ink 1 and the second ink 2 containing the above components have mutually different characteristics after curing.

A characteristic of the first ink 1 is that it stretches at least 70% when the first ink 1 is cured into a film 1' with a thickness t₁ of 5 µm, and the film 1' is stretched at a temperature of 150°C (see FIGS. 5A to 5D). This characteristic will hereinafter be called the "first characteristic." Meanwhile, a characteristic of the second ink 2 is that when the second ink 2 is cured into a film 2' with a thickness t₂ of 50 to 200 µm, the film 2' has an elastic modulus of no more than 200 MPa (see FIGS. 6A to 6D). This characteristic will hereinafter be called the "second characteristic." A comparison of the film 1' and the film 2' reveals that the film 1' has better stretchability and higher elasticity than the film 2', and that the film 2' has low elasticity.

The stretching ratio (stretchability) of the film 1' is defined as follows.

As shown in FIG. 5A, a resin substrate 300 was readied that was in the form of a board having a length L₃, a thickness t₃, and a width w₃. Examples of the resin material that make up the substrate 300 include polyethylene terephthalate (PET), polycarbonate, and various other kinds of thermoplastic elastomer.

The first ink 1 is then applied by inkjet onto the substrate 300.

Then, as shown in FIG. 5B, the first ink 1 on the substrate 300 is irradiated with ultraviolet rays from an ultraviolet ray irradiation apparatus 500. The peak wavelength of the ultraviolet rays here is approximately 390 nm, and the duration of ultraviolet ray irradiation is 0.05 to 5 seconds.

As shown in FIG. 5C, this forms a film 1' by curing the first ink 1 on the substrate 300. This film 1' is substantially circular in plan view, having a diameter Ød₁. The thickness t₁ of the film 1' is 5 µm.

Then, as shown in FIG. 5D, the substrate 300 on which the film 1' has been formed is placed in a chamber (not shown), for example, the inside of this chamber is heated to 150°C with an electric heater, and this heated state is maintained.

The substrate 300 is then pulled until its entire length is 2L. The pulling rate here is 1.0 mm/sec.

The stretching ratio is defined by (Δd/d) × 100, and the value thereof is at least 70%.

Meanwhile, the stretching ratio of the film 2' is defined as follows.

As shown in FIG. 6A, a resin substrate 400 is readied. The resin material that makes up the substrate 400 can be the same as that used for the substrate 300, for example.

A second ink 2 is then applied by inkjet on the substrate 400.

Then, as shown in FIG. 6B, the second ink 2 on the substrate 400 is irradiated with ultraviolet rays from the ultraviolet ray irradiation apparatus 500. The peak wavelength of the ultraviolet rays here is approximately 390 nm, and the duration of ultraviolet ray irradiation is 0.1 to 10 seconds. A film thickness that allows easy measurement of the elastic modulus cannot be reached in a single printing, so this printing is repeated a number of times to form a film of the desired thickness.

Consequently, as shown in FIG. 6C, the film 2' is formed on the substrate 400 by curing the second ink 2. This film 2' is substantially circular in plan view, having a diameter Ød₂. The thickness t₂ of the film 2' is 50 to 200 µm.

Then, as shown in FIG. 6D, the film 2' is peeled off of the substrate 400. The elastic modulus of the peeled film 2' is then measured using an elastic modulus measurement apparatus (such as the "CC Series" made by Nihon Techno-Plus), and this measurement value is 200 MPa or less.

In the manufacture of the printed matter 100, all or part of the substrate 101 is coated with the first ink 1 having the first characteristic and the second ink 2 having the second characteristic. Here, the first ink 1 and the second ink 2 are applied so that they are superimposed at the same place on the substrate 101, that is, they are mixed. After this, the ink on the substrate 101 (the mixed first ink 1 and second ink 2) is cured by being irradiated with ultraviolet rays from the ultraviolet ray irradiation apparatus 500. This forms the printing layer 102.

Because the second ink 2 is substantially colorless and transparent as mentioned above, even though the first ink 1 and the second ink 2 are mixed, any change in the original color of the first ink 1 can be minimized or prevented.

The first ink 1 and the second ink 2 can be cured all at once with ultraviolet rays having the same peak wavelength. There are no particular restrictions on the peak wavelength of these ultraviolet rays, but at least 350 nm and more than 450 nm is preferable, and at least 380 nm and no more than 420 nm is more preferable, for example.

In contrast, if the peak wavelength at which the first ink 1 cures is different from the peak wavelength at which the second ink 2 cures, that is, if the curing wavelengths are different, the inks will have to be irradiated with ultraviolet rays of their own peak wavelength. However, if ultraviolet rays of the same peak wavelength can be used, then the step of curing the first ink 1 and the second ink 2 and forming the printing layer 102 can be carried out more easily and quickly in the manufacture of the printed matter 100.

An example of a method for curing the first ink 1 and the second ink 2 with ultraviolet rays having the same peak wavelength is to add the same type (a common) polymerization initiator to each of the inks.

It is preferable for the first ink 1 and the second ink 2 to each have a viscosity of at least 1 mPa·s and no more than 1000 mPa·s near 25 degrees (normal temperature), with a range of at least 1 mPa·s and no more than 50 mPa·s being even better. When an inkjet head is used after being heated to 40 degrees, where µ₁ represents the viscosity of the first ink 1 at 40 degrees, and µ₂ represents the viscosity of the second ink 2 at 40 degrees, it is preferable if the equation ((µ₁ - µ₂)/ µ₁) × 100 = ±10 (%) is satisfied.

Within the above range, when the first ink and second ink are each discharged by inkjet method, this discharge will be carried out stably.

It is also preferable if the surface tension of the first ink 1 and the second ink 2 near 25 degrees (normal temperature) is at least 5 mN/m and no more than 200 mN/m, with a range of at least 10 mN/m and no more than 40 mN/m being even better. When an inkjet head is used after being heated to 40 degrees, where f₁ represents the surface tension of the first ink 1 at 40 degrees, and f₂ represents the surface tension of the second ink 2 at 40 degrees, it is preferable if the equation ((f₁ - f₂)/f₁) × 100 = ±10 (%) is satisfied.

Within the above range, when the first ink 1 and the second ink 2 are each discharged by inkjet method, this discharge will be carried out stably. Also, the first ink 1 and the second ink 2 will exhibit the same wetting and spreading behavior on the substrate 101, the inks will spread out uniformly, and color unevenness on a single printing layer 102 can be effectively prevented.

Adjustment of the ink viscosity or surface tension can be accomplished by adjusting the amount in which surfactants and other such additives are contained.

The printed matter 100 is the product of coating the sheet-form substrate 101 with the first ink 1 and the second ink 2 constituted as above, and curing the inks.

Next, this printed matter 100 will be described.

### Printed Matter

As shown in FIG. 3, the printed matter 100 has the substrate 101 and the printing layer 102 that is formed directly or indirectly on the substrate 101.

There are no particular restrictions on the material that makes up the substrate 101, and various types of resin, various types of glass, various types of metal, and so forth can be used, for example, but a resin material is preferable from the standpoint of deforming by mechanical processing.

There are no particular restrictions on the resin material, but examples include polyethylene, polypropylene, an ethylene-propylene copolymer, an ethylene-vinyl acetate copolymer (EVA), and other such polyolefins, cyclic polyolefins, modified polyolefins, polyvinyl chloride, polyvinylidene chloride, polystyrene, polyamide, polyimide, polyamideimide, polycarbonate, poly-(4-methylpentene-1), ionomers, acrylic resins, polymethyl methacrylate, acrylonitrile-butadiene-styrene copolymer (ABS resin), acrylonitrile-styrene copolymer (AS resin), butadiene-styrene copolymer, polyoxymethylene, polyvinyl alcohol (PVA), ethylene-vinyl alcohol copolymer (EVOH), polyethylene terephthalate (PET), polybutylene terephthalate (PBT), polycyclohexane terephthalate (PCT), and other such polyesters, polyether, polyether ketone (PEK), polyether ether ketone (PEEK), polyether imide, polyacetal (POM), polyphenylene oxide, modified polyphenylene oxide, polysulfone, polyether sulfone, polyphenylene sulfide, polyallylate, aromatic polyesters (liquid crystal polymers), and the like, as well as copolymers, blends, polymer alloys, and so forth whose main components are these. These resins can be used singly or in combinations of two or more (for example, as a laminate of two or more layers).

When the printed matter 100 is to be viewed from the top side (the substrate 101 side), the substrate 101 shall be transparent. On the other hand, when the printed matter 100 is to be viewed from the bottom side (the printing layer 102 side), the substrate 101 may be either opaque or transparent.

The printing layer 102 is formed by printing. In this embodiment, this formation is performed as follows, for example.

As shown in FIG. 2, a printing apparatus (not shown) is used to apply (coat) the first ink 1 and the second ink 2 superimposed over the substrate 101 by inkjet method. After this, the inks are irradiated with radiation from the ultraviolet ray irradiation apparatus 500 to cure the inks. This forms the printing layer 102.

The thickness of the substrate 101 and the thickness of the printing layer 102 will depend on what the molded article 200 is, that is, on what the molded article 200 is used for, but if the molded article 200 is a panel for an automotive speedometer, for instance, the thickness of the substrate 101 is preferably 0.1 to 2 mm, and more preferably 0.3 to 0.8 mm. The thickness of the printing layer 102 is preferably 5 to 200 µm, and more preferably 5 to 100 µm.

The molded article 200 is obtained by subjecting the printed matter 100 to mechanical processing.

This molded article 200 will now be described.

### Molded Article

As shown in FIG. 4, the molded article 200 has a bottomed cylindrical portion 103 and an opening 104. The bottomed cylindrical portion 103 is formed by drawing. The opening 104 is formed by punching. An NC machine or other such machine tool can be used as the apparatus for this processing.

When the printed matter 100 is subjected to mechanical processing in the manufacture of the molded article 200, there is the risk that this processing will cause a change in the internal stress at the portion where the printing layer 102 is subjected to the processing, or the surrounding area thereof, resulting in cracking, peeling, or other such problems. These problems are prevented from occurring in the molded article 200, however, which will be described below.

As mentioned above, the printing layer 102 is a layer composed of the first ink 1 containing a pigment as a colorant, and the second ink 2 that is colorless and transparent. The first ink 1 has the first characteristic, and the second ink 2 has the second characteristic.

Let us consider here what would happen if the printing layer 102 were composed of just the first ink 1, or the printing layer 102 were composed of just the second ink 2.

In the first case, a TMA apparatus was used to apply a constant pressure to the printing layer 102 at a temperature of 30°C, and the maximum amount of displacement at this point (the amount of depression) and the amount of displacement recovery (restoration amount) when the pressure was released were both measured a plurality of times. The recovery ratio was calculated by dividing the amount of displacement recovery by the maximum amount of displacement. As a result, it was found that the recovery ratio averages 30% (margin of error of ±5%), although this depends on the amount of pressure and other such test conditions (see FIG. 7). This tells us that the printing layer 102 is a layer that readily undergoes plastic deformation in the first case, and when subjected to mechanical processing, cracking, peeling, and other such problems occur.

Meanwhile, in the latter case, it was found that the recovery ratio averages 80% (margin of error of ±10%) (see FIG. 7). This tells us that the printing layer 102 is a layer that readily undergoes elastic deformation in the second case. Since the second ink 2 is colorless and transparent, and is never used by itself, evaluation of when the printing layer 102 is subjected to mechanical processing is omitted.

However, with the present invention, in the first case, unlike in the second case, the printing layer 102 is composed of the first ink 1 and the second ink 2, and it was found that the recovery ratio averages 55% (margin of error of ±3%), although this varies with the mixing ratio (see FIG. 7). As is clear from FIG. 7, with the present invention, the printing layer 102 can be said to be a layer having properties somewhere in between the first case and the second case. Cracking, peeling, and other such problems are effectively prevented from occurring in the printing layer 102, even when the printing layer 102 is subjected to mechanical processing, by a combination of the effect of the first characteristic (excellent stretchability) and the effect of the second characteristic (excellent elasticity).

Thus, the durability of the printing layer 102 is enhanced by the simple act of mixing (superimposing) the colorless and transparent second ink 2, which has the second characteristic and with which the loss of color of the first ink 1 is prevented or suppressed, with the colored first ink 1, which has the first characteristic. Consequently, processability is excellent in the manufacture of the molded article 200 by performing mechanical processing on the printed matter 100 having the printing layer 102 (coated surface). Also, if the molded article 200 is an automotive speedometer, for example, the printing layer 102 can be stored with its high quality preserved over an extended period of time, under a variety of environments, such as when the vehicle interior temperature rises to over 50°C on a hot summer day.

In the region where the printing layer 102 is formed, that is, in the region where the substrate 101 is coated with the superimposed first ink 1 and second ink 2, the total weight of the polymerizable compound (b-1) contained by the first ink 1 is preferably the same as or greater than (such as at least 1.1 times) the total weight of the polymerizable compound (b-2) contained by the second ink 2. Consequently, cracking, peeling, and the like are effectively prevented from occurring in the printing layer 102 when the printed matter 100 is mechanically processed (when the molded article 200 is manufactured), and the printing layer 102 has even better durability.

Let us also consider what happens when, unlike with the present invention, the substrate 101 is coated with a previously prepared mixture of the first ink 1 and the second ink 2 before the substrate 101 is coated with the first ink 1 and the second ink 2, and when the colored first ink 1 has the second characteristic and the colorless and transparent second ink 2 has the first characteristic.

In both cases, the result is that the printing layer 102 undergoes cracking, peeling, and other such problems due to the lack of a combined effect from the effect produced by the first characteristic and the effect produced by the second characteristic. The cause of the former is assumed to be that if the inks are mixed ahead of time, the pigment loses its dispersion stability in the inks. The cause of the latter is assumed to be that there is a pronounced decrease in the elasticity of the pigment.

Thus, the first ink 1 and the second ink 2 must be mixed for the first time on the substrate 101, and the first ink 1 must have the first characteristic and the second ink 2 the second characteristic.

The ink set, printed matter, and molded article of the present invention were described above through the embodiments shown in the drawings, but the present invention is not limited to these, and the various components that make up the ink set, printed matter, and molded article can be substituted with any other components that will give the same function. Also, other components may be added as desired.

The ink set was one that had a first ink of four colors in the above embodiment, but this is not the only option, and may instead be one having a first ink of one color, two colors, three colors, or five colors.

Also, when the printed matter is subjected to mechanical processing, it may be heated while undergoing this processing.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. An ink set comprising:
a first ink containing a pigment as a colorant; and
a second ink containing no pigment,
wherein a film of the first ink stretches at least 70% when the first ink is cured into the film with a thickness of 5 µm and the film is stretched under a 150°C environment, and
a film of the second ink has an elastic modulus of no more than 200 MPa when the second ink is cured into the film with a thickness of 50 to 200 µm.

2. The ink set according to Claim 1, wherein
the first ink and the second ink are applied at the same region on at least a part of a printing medium.

3. The ink set according to Claim 2, wherein
the first ink and the second ink each contain a polymerizable compound, and
in the region of the printing medium coated with the first ink and the second ink, a total weight of the polymerizable compound contained by the first ink is the same as or greater than a total weight of the polymerizable compound contained by the second ink.

4. The ink set according to Claim 1, wherein
the first ink contains a polymerization initiator and a polymerizable compound, and a monofunctional polymerizable compound accounts for at least 65 wt% of a total weight of the polymerizable compound.

5. The ink set according to Claim 1, wherein
the second ink contains a polymerization initiator and a polymerizable compound, and a polyfunctional polymerizable compound accounts for at least 50 wt% of a total weight of the polymerizable compound.

6. The ink set according to Claim 1, wherein
the first ink and the second ink are cured by being irradiated with ultraviolet rays of the same wavelength.

7. The ink set according to Claim 1, wherein
the first ink and the second ink are each cured by being irradiated with ultraviolet rays, and the wavelength of the ultraviolet rays is at least 350 nm and no more than 450 nm.

8. The ink set according to Claim 1, wherein
the first ink and the second ink each have a viscosity at 40°C of at least 1 mPa•s and no more than 1000 mPa•s.

9. The ink set according to Claim 1, wherein
an equation ((µ₁ - µ₂)/ µ₁) × 100 = ±10 (%) is satisfied, where µ₁ represents a viscosity of the first ink at 40°C, and µ₂ represents a viscosity of the second ink at 40°C.

10. The ink set according to Claim 1, wherein
the first ink and the second ink each have a surface tension at 40°C of at least 5 mN/m and no more than 200 mN/m.

11. The ink set according to Claim 1, wherein
an equation ((f₁ - f₂)/f₁) × 100 = ±10 (%) is satisfied, where f₁ represents a surface tension of the first ink at 40°C, and f₂ represents a surface tension of the second ink at 40°C.

12. The ink set according to Claim 1, wherein
the second ink is substantially colorless.

13. Printed matter comprising:
a printing medium; and
a printing layer formed on the printing medium by printing and curing a first ink containing a pigment as a colorant, and a second ink containing no pigment,
wherein a film of the first ink stretches at least 70% when the first ink is cured into the film with a thickness of 5 µm and the film is stretched under a 150°C environment, and
a film of the second ink has an elastic modulus of no more than 200 MPa when the second ink is cured into the film with a thickness of 50 to 200 µm.

14. A molded article comprising printed matter according to claim 13.
